# EUROPEAN PATENT SPECIFICATION

(11) **EP 1 827 115 B1**
(45) Date of publication and mention of the grant of the patent: **23.02.2011**
(21) Application number: 05851063.7
(22) Date of filing: 15.12.2005
(51) Int. Cl.: A21D 2/02, A21D 2/14, A21D 8/02, A21D 10/02

(54) **METHOD OF PREPARING A BAKED OR FRIED PRODUCT FROM LEAVENED DOUGH**
VERFAHREN ZUR HERSTELLUNG EINES GEBACKENEN ODER FRITTIERTEN PRODUKTS AUS GELOCKERTEM TEIG
PROCEDE DE PREPARATION D'UN PRODUIT CUIT AU FOUR OU FRIT A PARTIR D'UNE PATE LEVEE

(30) Priority: 16.12.2004 EP 04078417
(43) Date of publication of application: 05.09.2007
(73) Proprietor: CSM Nederland B.V., 1112 XE Diemen (NL)
(72) Inventor: BRINKER, Eva-Maria, D-48429 Rheine (DE); SCHMIDT, Kerstin, D-28357 Bremen (DE)
(74) Representative: Swinkels, Bart Willem
(86) International application number: PCT/NL2005/050076
(87) International publication number: WO 2006/065134

(56) References cited:
- EP-A- 0 873 688
- US-A- 2 478 618
- US-A- 3 767 421
- US-A- 4 374 151
- US-A- 6 042 852
- US-A- 6 149 960
- US-A1- 2004 096 561
- US-A1- 2004 208 957
- US-A1- 2004 241 292

## Description

### TECHNICAL FIELD OF THE INVENTION

The present invention relates to a method of preparing a baked or fried product from leavened dough, e.g. a leavened bread dough or a leavened puff pastry dough. More particularly, the present invention relates to a method of preparing a fully proofed dough that is stable against overproofing, i.e. that can be stored under ambient conditions for several hours without the occurrence of dough collapse.

### BACKGROUND OF THE INVENTION

Traditionally, leavened dough is prepared by adding live yeast (baker's yeast) to the dough and by proofing the dough prior to baking. Proofing usually refers to a process by which pieces of yeast dough shaped to form bakery products are raised or enlarged preparatory to their being baked. Thus pastries, rolls, breads and other bakery products must undergo proofing before being put in an oven to be baked. When dough intermixed with live yeast is placed in a warm moist environment, carbon dioxide is internally generated throughout the body of the dough to create myriad gas pockets. These gas pockets enlarge or raise the dough and also alter its texture.

When the proofed dough is baked, the resultant product is lighter and more chewy than dough products which are not raised prior to baking. Thus croissants, doughnuts, pan pizzas, rolls and breads must be properly proofed before being baked. Proofing therefore is the process by which the shaped yeast dough pieces are subjected to a moist, hot-air environment to raise the pieces, and a proofing cabinet is a chamber in which proofing takes place.

The atmosphere in which proofing of yeast dough takes place within a cabinet needs to be controlled carefully to avoid underproofing or overproofing. Thus should the dough pieces receive excessive heat, they will rise too fast, thereby producing large gas pockets that cause the pieces to collapse during baking. On the other hand, insufficient heat results in dough pieces that are not fully raised, and when these pieces are baked they will have an undesirably dense structure. Excessive moisture in proofing causes the product to have a mushy surface, while insufficient moisture renders the surface of the baked product tough and rubbery.

Properly proofed yeast dough pieces must be handled with great care as they are very vulnerable. If left to rest under ambient conditions, fully proofed yeast dough will quickly collapse due to overproofing. Overproofing results from the continued activity of the live yeast, resulting in excessive carbon dioxide production and weakening of the dough structure. In order to avoid the occurrence of overproofing proofed yeast dough pieces have to be baked shortly after proofing or they have to be stored under refrigerated conditions until baking.

The above drawbacks of yeast leavened doughs are well understood in the bakery art. Some of these drawbacks may be overcome by using an acid/base leavening agents instead of yeast. Acid/base (or chemical) leavening systems produce carbon dioxide in the presence of water and are used without yeast in cakes, muffins, cookies and the like. Such acid/base leavening systems contain a combination of an alkaline carbon dioxide releasing component (leavening base), usually sodium bicarbonate, together with an acid or acidic salt (leavening acid), which 2 components react under the formation of carbon dioxide in the presence of moisture.

The use of acid/base leavening systems in dough has so far been limited due to the fact that the reaction rate of acid/base leavening systems is difficult to control. Conventional acid/base leavening systems will start releasing carbon dioxide during dough mixing as soon as they come into contact with water. Thus, unless mixing/kneading times are reduced and the dough is shaped immediately after mixing/kneading insufficient non-reacted leavening system will be left to expand the dough. US 3,170,795 describes a pulverulent culinary mix for the quick preparation of baked bread-type products without conventional proofing and gluten development steps, said mix comprising flour; shortening; glucono-delta-lactone; a fast-acting acidic leavening acid; and a basic carbon dioxide producing chemical leavening substance. This US patent effectively teaches to bake the bread dough immediately after shaping.

In order to avoid the aforementioned problem of premature carbon dioxide release, it has been suggested to add the leavening system or a reactant of the leavening system during the final stages of mixing, or to employ encapsulated leavening agents in combination with mild mixing conditions.

For instance, US 6,165,533 describes a method of preparing a dough composition, comprising: (a) forming a batter comprising water, flour, a leavening agent, and an encapsulated complementary leavening agent; and (b) combining said batter with additional ingredients comprising flour to formulate a dough; wherein said encapsulated complementary leavening agent does not react with the leavening agent until the dough is formulated. The US patent is primarily concerned with the preparation of canned dough compositions which are proofed in the can.

This is also the case of US 2,478,618 which describes a packaged pre-leavened dough comprising a baking carbonate and a slow-acting baking acid.

US 6,149,960 describes a process for preparing a chemically leavened dough comprising: adding an effective amount of (i) at least one slow release leavening agent and (ii) at least one heat activated leavening acid to dry ingredients or a dough made by mixing a liquid with said dry ingredients, and (b) adding an effective amount of a carbonate factor late in the dough mixing process to prepare said chemically leavened dough.

WO 2004/17740 describes a method of preparing a chemically leavened dough composition, comprising: combining dough ingredients into a mixture using a mixer and a method comprising a high speed mixing step and uniformly distributing encapsulate chemical leavening agent particles into the dough ingredients by exposing the encapsulated chemical leavening agent to no more than 160 seconds of high speed mixing. It is observed in the international application that encapsulated chemical leavening agent can be used to control the timing of dough leavening, preferably so that minimal reaction and minimal gas production take place during mixing, packaging and storage, allowing normal leavening during baking (page 3, lines 12-18).

Ideally, acid/base leavening systems should be capable of closely mimicking the leavening action of yeast as this will ensure that also the eating quality of the final baked or fried product resembles that of a yeast leavened product. More particularly, acid/base leavening systems should (a) not start generating substantial quantities of carbon dioxide until after the dough pieces have been shaped and (b) develop their leavening action well before baking or frying. Furthermore, the duration of the leavening period should be sufficiently long to allow the dough (gluten) to develop. Finally, the leavening system should be easily applicable, meaning that it will deliver the aforementioned functionalities when it is mixed with the other dough ingredients during the initial stages of mixing/kneading.

### SUMMARY OF THE INVENTION

The present inventors have developed a method of preparing an acid/base leavened dough that fulfils the aforementioned requirements. The inventors have discovered that slow reacting acid/base leavening systems may advantageously be employed in the preparation of leavened dough pieces that can be baked or fried to produce baked or fried products of excellent quality, provided the preparation method employs a proofing step of at least 40 minutes during which sufficient carbon dioxide is released to yield a specific volume of at least 1.4 ml/g. Furthermore, the inventors have discovered that the acid/base leavened dough pieces obtained by the present method are surprisingly stable, i.e. prior to baking or frying they can be stored for several hours under ambient conditions, without the risk of e.g. dough collapse.

The slow reacting acid/base leavening systems employed in the present method comprise (a) a slow reacting leavening acid selected from the group consisting of sodium acid pyrophosphate, calcium acid pyrophosphate, aluminium phosphate, sodium aluminium phosphate, dicalcium phosphate dihydrate, glucono-δ-lactone, encapsulated leavening acids and combinations thereof and/or (b) an encapsulated leavening base.

### DETAILED DESCRIPTION OF THE INVENTION

Accordingly, the present invention relates to a method of preparing a baked or fried product from leavened dough, comprising the successive steps of:
a. forming a dough by combining flour, water, a slow reacting leavening system consisting of a leavening acid and a leavening base and optionally one or more other bakery ingredients, said slow reacting leavening system contains (a) a slow reacting leavening acid selected from the group consisting of sodium acid pyrophosphate, calcium acid pyrophosphate, aluminium phosphate, sodium aluminium phosphate, glucono-δ-lactone, encapsulated leavening acids and combinations thereof, and/or (b) an encapsulated leavening base;
b. shaping the dough;
c. proofing the dough at a temperature in the range of 5-45 °C for at least 40 minutes to obtain a proofed dough with a specific volume of at least 1.4 ml/g; and
d. baking or frying the proofed dough;
wherein prior to baking of frying the proofed dough is stored under ambient conditions for more than 1 hour.

The term "leavened dough" as used herein refers to dough that has undergone a leavening process resulting in the formation of gas filled pockets throughout the dough. Freshly leavened doughs are characterised by the presence elevated carbon dioxide levels in the gas filled pockets. Typical examples of leavened dough include bread dough, pastry dough (including e.g. croissant and Danish pastry dough), cookie dough and doughnut dough. Cake batters and the like are not encompassed by the term leavened dough. The benefits of the present invention are particularly pronounced in the preparation of bread dough and puff pastry dough. Most preferably the present method is used to prepare a leavened bread dough, especially a non-laminated bread dough.

The term "shaping" refers to the manual or mechanical moulding of dough pieces into the desired shape. The term shaping also encompasses the action of filing tins with bread dough.

The terminology "forming a dough by combining flour, water, a slow reacting leavening system consisting of a leavening acid and a leavening base and optionally one or more other bakery ingredients" encompasses the use of pre-blended ingredients, .e.g. bread improvers that contain flour, the slow reacting leavening system and one or more other bakery ingredients. It is an essential aspect of the present invention that the components of the slow reacting leavening system are combined with the other dough ingredients, notably water, essentially simultaneously. Thus, the present method is clearly distinct from the methods taught by e.g. US 6,165,533 and US 6,149,960.

Although the inventors do not wish to be bound by theory it is believed that the use of a very slow reacting acid/base leavening system offers the advantage that during the early stages of dough preparation, notably mixing and kneading, only a limited amount of carbon dioxide is formed. Thus, the handling properties of the non-leavened freshly prepared dough as well as its structure and characteristics are very similar to those of a yeast dough. It is an essential aspect of the present invention that the proofing time employed is sufficient to generate a substantial volume increase and to allow dough (or gluten) development to occur. Furthermore, unlike many prior art methods, the present method does not rely on the leavening action of the slow reacting leavening system during baking or frying. As a matter of fact, it is strongly preferred that essentially all leavening action of the leavening systems has been expended before baking or frying. Thus, like yeast leavened dough, the volume increase observed during oven baking is caused by ovenspring and not by the leavening action of the acid/base leavening system.

The proofed dough produced in accordance with the present method offers the important advantage that it need not be baked or fried immediately after proofing in order to avoid dough collapse. Also, the proofed dough does not need to be stored under refrigerated conditions if it cannot be baked or fried immediately. In a particularly preferred embodiment, the proofed dough, especially a fully leavened dough, is stored under ambient conditions for more than 2 hours, even more preferably for more than 4 hours, especially for more than 6 hours and most preferably for more than 8 hours prior to baking or frying. Typically, the proofed dough is stored under ambient conditions for not more than 24 hours, preferably for not more than 16 hours prior to baking or frying.

In one particular embodiment of the invention, the proofed dough is baked after it has been stored under ambient conditions, without said proofed dough having been stored or transported under refrigerated or freezing conditions. It is known that dough collapse of especially yeast leavened doughs may be prevented or postponed by refrigerating or freezing the proofed dough. The present proofed dough offers the advantage that it will remain stable without the need of employing refrigerated or freezing conditions.

The stability of the proofed dough is not only manifest in the dough product obtained directly after proofing. Indeed, the present proofed dough may advantageously be stored and/or transported under refrigerated or freezing conditions, following which the proofed dough can suitably be stored under ambient conditions for at least 1 hour prior to baking or frying. Also after frozen or refrigerated storage, the present dough retains its stability and does not suffer from e.g. dough collapse. Accordingly, in a particularly preferred embodiment of the present method, prior to baking or frying, the proofed dough is successively packaged, frozen, thawed and stored under ambient conditions for at least 1 hour, more preferably for at least 2 hours and even more preferably for at least 4 hours. This embodiment of the invention offers the advantage that the proofed dough may be produced in a dedicated professional bakery, whereas the baked or fried product can be produced from the proofed dough in a different location with much less skilled personnel. Storage and/or transportation under refrigerated or freezing conditions offers the advantage that the time period between proofed dough manufacture and baking can be varied considerably. In addition, the stability of the proofed dough under ambient conditions offers the important additional advantage that even when the proofed dough has been removed from the freezer or refrigerator, it will be stable for several more hours. Thus, following thawing of the frozen proofed dough, high quality baked products may be produced therefrom on demand for up to 8 hours or more after thawing. As regards the packaging of the proofed dough it is preferred not to flush (fill) the package with carbon dioxide, more preferably the package is not flushed (filled) with any gas other than air. Likewise it is preferred not to employ vacuum during packaging of the proofed dough, e.g. to remove headspace.

During ambient storage, the proofed dough may suitably be covered to prevent the exterior of the dough from drying out. It is, however, not necessary to package the proofed dough prior to baking or frying in a sealed package. As a matter of fact, for reasons of convenience, it is preferred not to package the proofed dough. Likewise, it is also preferred not to proof the dough within a sealed package as described, for instance, in US 6,042,82 and US 2004/2421292.

Because the leavened dough employed in the present process is not stored under refrigerated or freezing conditions, it is not necessary to include additives to maintain quality during frozen storage and or to improve its thawing characteristics. Consequently, the leavened dough preferably does not contain a water-soluble, melting point depressant or it contains not more than 3% by weight of water contained in the dough of such a melting point depressant as taught in US 4,374,151. More specifically, the leavened dough preferably does not contain more than 3% by weight of water of water-soluble alcohols.

The present method offers the advantage that can suitably employ a resting period of up to 30 minutes prior to the shaping of the dough. Indeed, in a preferred embodiment of the invention, the present method employs a resting period of between 1 and 30 minutes, preferably of between 2 and 20 minutes, prior to shaping.

The rate at which carbon dioxide is produced by the reaction between the leavening acid and leavening base is dependent on the dough temperature. The present method may suitably employ proofing temperatures within the range of 5-45 °C. According to a particularly preferred embodiment, proofing is carried out at near ambient or below ambient temperatures, e.g. a temperature within the range of 5-25 °C, especially a temperature within the range of 18-25 °C. Proofing is advantageously conducted at a relative humidity of 60-90%, more preferably of 65-85%. Proofing in a relatively dry atmosphere will result in the formation of an exterior "skin" that adversely affects the quality of the final baked or fried product.

In a preferred embodiment of the invention the leavening system has a neutralising status of 50-150% and the leavening base is incorporated in the dough in an amount of 0.5-8.0 wt.%. The "neutralising status" of the present leavening system is defined as the ratio of the amount of leavening base present in the system and the amount needed to neutralise all of the leavening acid present in the same system. Preferably, the leavening system has a neutralising status of 50-130%, more preferably of 70-120% and most preferably of 80-110%. If the neutralising status is too high in the finished product, it creates soapy off-notes. If the neutralising status is too low, it will allow acidic notes to come through and it may result in over-browning during baking or frying.

The method of the present invention produces particularly good results if the dough is almost fully proofed. Accordingly, in a particularly preferred embodiment, at least 50%, more preferably at least 60%, even more preferably at least 70% and most preferably at least 80% of the carbon dioxide potential of the leavening base is released during proofing step b.

In a particularly advantageous embodiment of the invention the proofing temperature T (in °C) and the proofing time t (in minutes) employed meet the following condition: t > (75-T) x 1,2; and wherein the proofing temperature does not exceed 40°C.

Typically, in the present method the leavening acid is incorporated in the dough in a concentration of at least 1.0 wt.%, preferably of at least 1.5 wt.%. Usually, the amount of leavening acid employed does not exceed 8 wt.%, preferably it does not exceed 6 wt.%.

The concentration in which the leavening base is incorporated in the dough in a concentration equivalent to at least 1.0 leavening base by weight of the dough, preferably in a concentration equivalent to at least 1.5% leavening base by weight of the dough. The concentration of encapsulated leavening base typically does not exceed 6%, more preferably it does not exceed 5% by weight of the dough. The aforementioned concentration of leavening acid and leavening base refer to the leavening acid and leavening base *per se,* i.e. excluding the encapsulating material.

The leavening base employed in the present method may suitably be selected from the group consisting of alkali bicarbonates, alkaline-earth bicarbonates, ammonium bicarbonates, ammonium carbonates and combinations thereof. More preferably, the leavening base is selected from the group consisting of sodium bicarbonate, potassium bicarbonate, ammonium carbonate, ammonium bicarbonate and mixtures thereof. Preferably, the bicarbonate is an alkali or alkaline-earth bicarbonate, more preferably an alkali bicarbonate.

Leavening acids that are widely used in the preparation of leavened dough include sodium or calcium salts of ortho-, pyro-, and complex phosphoric acids in which at least two active hydrogen ions are attached to the molecule. Examples of commercially available baking acids include monocalcium phosphate monohydrate (MCP), monocalcium phosphate anhydrous (AMCP), sodium acid pyrophosphate (SAPP), calcium acid pyrophosphate (CAPP), sodium aluminum phosphate (SALP), dicalcium phosphate dihydrate (DPD), dicalcium phosphate (DCP), sodium aluminum sulfate (SAS), glucono-delta-lactone (GDL), potassium hydrogen tartrate (cream of tartar) and the like.

It is an essential aspect of the present invention that a slow reacting leavening acid is employed as a high rate of carbon dioxide release was found to adversely affect the quality of the final baked or fried dough product. Slow reacting leavening acids that perform particularly well in the present method are glucono-δ-lactone, sodium acid pyrophosphate, calcium acid pyrophosphate and combinations thereof, glucono-δ-lactone being most preferred.

The present method produces particularly advantageous results if it employs a leavening system that releases carbon dioxide at a particularly low rate, e.g. a leavening system that contains a combination of a slow reacting leavening acid and an encapsulated leavening base. The use of an encapsulated leavening base offers the important advantage that a fully proofed dough can be obtained that is particularly storage stable. Preferably, the present method employs an encapsulate that releases the leavening base slowly under proofing conditions. According to a particularly preferred embodiment, the encapsulated leavening base comprises a lipid coating with a melting point of at least 30 °C, preferably with a melting point of at least 35 °C, more preferably with a slip melting point of at least 40 °C and most preferably with a slip melting point of at least 45 °C. Typically, the melting point of the lipid coating will not exceed 80 °C, preferably it does not exceed 70 °C. The inventors have found that even though if the proofing temperature employed in the present method is well below the slip melting point of the lipid coating, the leavening base is nonetheless released from the encapsulate, be it a low rate.

The encapsulated leavening base typically comprises leavening base and lipid coating material in a weight ratio within the range of 4:1 to 1:9, more preferably in a weight ratio within the range of 2:1 to 1:5.

The present invention also encompasses the use of encapsulated leavening acid. The rate at which the leavening acid reacts with the leavening base may be controlled effectively by also encapsulating the leavening acid. In case the present method employs an encapsulated leavening acid, the encapsulate suitably exhibits the same melting behaviour as described herein before in relation to the encapsulated leavening base. The encapsulated leavening acid preferably comprises leavening acid and lipid coating material in a weight ratio of 4:1 to 1:9, more preferably in a weight ratio of 2:1 to 1:5.

The lipid coating employed in the aforementioned encapsulates typically contains at least 70 wt.% C₁₂-C₂₂ fatty acid esters, especially at least 70 wt.% C₁₂-C₂₂ fatty acid esters selected from the group consisting of triglycerides; diglycerides; monoglycerides; esters of monoglycerides and food acids and esters of diglycerides and food acids. The aforementioned food acids are preferably selected from the group consisting of acetic acid; propionic acid; butyric acid; citric acid; lactic acid; tartaric acid; diacetyl tartaric acid; maleic acid; malic acid; succinic acid; and phosphoric acid. Even more preferably the food acids are selected from the group consisting of acetic acid; propionic acid; butyric acid; citric acid; lactic acid; tartaric acid; and diacetyl tartaric acid.

The present method utilises a leavening system that derives its leavening capacity from the reaction between a leavening acid and a leavening base. However, minor quantities of dry yeast may be employed in the present method alongside the acid/base leavening system, provided the leavening contribution of the yeast is negligible. Thus, step a. of the present method may optionally comprise incorporating dry yeast in a concentration that does not exceed 0.5% by weight of flour, more preferably does not exceed 0.2% by weight of flour. Most preferably, the present method does not comprise the addition of leavening yeast.

In an advantageous embodiment of the present method, most of the leavening action of the leavening systems has been expended before baking or frying. Preferably, at least 80%, more preferably at least 90% and most preferably at least 95% of the carbon dioxide potential of the leavening base is released before baking frying.

In order to ensure that the carbon dioxide generating capacity of the acid/base leavening systems is almost completely expended, it is advisable to ensure that the time period between shaping and baking or frying exceeds 1.5 hours. According to a particularly preferred embodiment of the invention the time period between shaping and baking or frying exceeds 3 hours or even 4 hours. Although usually the acid/base leavening system will have expended its carbon dioxide generating power after 2 hours, the present invention offers the important advantage that the fully leavened dough can be stored under ambient conditions without significant adverse effects for several hours before baking or frying.

Baked products of excellent quality can be obtained by the present method by baking the proofed dough in an oven that was previously preheated to a temperature of at least 190 °C, preferably of at least 200 °C. In a preferred embodiment of the invention, the preparation of the leavened dough and the baking/frying operation are carried out in a different locations. The present invention offers the advantage that it enables the preparation of a storage stable dough that can stored and transported under ambient conditions. Thus, in a particularly preferred embodiment, the method of the present invention comprises the steps of forming, shaping, proofing and packaging the dough in one location, followed by transporting the dough by means of a motorised vehicle (e.g. a truck) to another location where the dough is baked. Thus, the present invention makes it possible to prepare freshly baked products anywhere an oven is available and without the need of refrigerated/frozen storage or transportation.

The invention is further illustrated by means of the following examples.

### EXAMPLES

### Example 1

White tin breads were prepared on the basis of the following recipes:

| **Dough ingredients** | **A** | **B** | **C** |
|---|---|---|---|
| Wheat flour | 1000 g | 1000 g | 1000 g |
| Water | 650 g | 650 g | 650 g |
| Salt | 5 g | 15 g | 20 g |
| Fat | 20 g | 20 g | 20 g |
| Baking improver¹ | 20 g | 20 g | 20 g |
| Glucono-δ-lactone² | | 66.4 g | |
| Sodium acid pyrophosphate³ | 41 g | | |
| Fat-encapsulated sodium bi-carbonate ⁴ | 61 g | 61 g | |
| Yeast | | | 30 g |

| | | | |
|---|---|---|---|
| ¹ Olympial® ex BIB Ulmerspatz ² Lysactone™ ex Roquette ³ SAPP 10 ex Chemische Fabrik Budenheim⁴ Bakeshure™ 180 ex Balchem | | | |

The dough ingredients were admixed in Diosna™ SP 12 Spiral mixer and kneaded for 2 (slow) + 6 (fast) minutes. With the exception of dough B which was shaped immediately after kneading, the doughs were allowed to rest for 15 minutes before they were divided in pieces of about 550 grams and transferred into tins. Next the dough pieces were proofed at 35 °C and a relative humidity of 75% for 90 minutes. After proofing the tins were transferred into a preheated oven and baked for 30 minutes at 215 °C using repeated steam injections (2.51).

The baked products were evaluated by a panel of experienced bakers. The following results were obtained:

| | A | B | C |
|---|---|---|---|
| During baking | Normal ovenspring and browning | Normal ovenspring Browning slightly faster | Normal ovenspring and browning |
| Bread surface | Comparable to yeast leavened bread | Comparable to yeast leavened bread. Colour of crust slightly more brown | Normal yeast leavened bread |
| crumb | Slightly yellowish Irregular structure that is typical of yeasted bread | White crumb Irregular structure that is typical of yeasted bread | White crumb Normal yeast leavened bread |
| crust thickness | approximately 3mm | approximately 3mm | approximately 3mm |
| bread volume | 4380ml - 1000g | 4650ml - 1000g | 4650ml - 1000g |

The above results show that the use of a slow reacting leavening system in combination with prolonged proofing times yields bread with crust and crumb characteristics that are very similar to that of a yeast leavened bread.

### Example 2

White tin breads were prepared on the basis of the following recipes, using the same ingredients as in example 1 unless otherwise indicated:

| **Dough ingredients** | **A** | **B** | **C** | **D** |
|---|---|---|---|---|
| Wheat flour | 1000 g | 1000 g | 1000 g | 1000 g |
| Water | 650 g | 650 g | 650 g | 650 g |
| Salt | 5 g | 5 g | 5 g | 5 g |
| Fat | 20 g | 20 g | 20 g | 20 g |
| Baking improver | 20 g | 20 g | 20 g | 20 g |
| Sodium acid pyrophosphate ¹ | 41 g | 41 g | | |
| Sodium acid pyrophosphate ² | | | 41 g | 41 g |
| Fat-encapsulated sodium bi-carbonate | 61 g | | 61 g | |
| Sodium bicarbonate (standard) | | 30.5 g | | 30.5 g |

| | | | | |
|---|---|---|---|---|
| ¹ SAPP 10 ex Chemische Fabrik Budenheim ² SAPP 40 ex Chemische Fabrik Budenheim | | | | |

The dough ingredients were admixed in Diosna™ SP 12 Spiral mixer and kneaded for 2 (slow) + 6 (fast) minutes. Doughs A and C was allowed to rest for 15 minutes before they were divided in pieces of about 550 grams which were put into tins. Dough B was divided into pieces of about 550 grams and transferred into tins immediately after mixing and kneading. Next the dough pieces were proofed at 35 °C and a relative humidity of 75%. Dough pieces B and C were proofed for 60 minutes, whereas dough pieces A were proofed for 90 minutes. After proofing the tins were transferred into a preheated oven and baked for 30 minutes at 215 °C using repeated steam injections (2.51).

The baked products were evaluated by a panel of experienced bakers. The following results were obtained:

| | **A** | **B** | **C** | **D** |
|---|---|---|---|---|
| After proofing | Fully proofed | Fully proofed | Nearly no volume increase | Nearly no volume increase |
| During baking | Normal ovenspring and browning | Normal ovenspring and browning | Small ovenspring Slight browning | Small ovenspring Slight browning |
| Breadsurface | Comparable to yeast leavened | Comparable to yeast leavened | Less colour | Less colour |
| crumb | Slightly yellowish Irregular structure that is typical of yeasted bread | Slightly yellowish Irregular structure that is typical of yeasted bread | Slightly yellowish Regular structure similar to cake | Slightly yellowish Regular structure similar to cake |
| bread volume | 4500ml - 1000g | 4300ml - 1000g | 2870ml - 1000g | 2730 ml -1000g |

The above results show that the use of a fast reacting leavening system in combination with prolonged proofing times yields low volume breads with a pale surface colour and an undesirably dense crumb structure.

### Example 3

White tin breads were prepared as in Example 1 on the basis of the recipe A, except that the dough was not subjected to resting before shaping and in that he dough was proofed for 30 minutes instead of 90 minutes. During baking uncontrolled ovenspring was observed, resulting in breads with an average volume of 3375 ml per 1000 g. The breads so obtained exhibited a thin crust (<1 mm thickness) and a light brownish, unbaked surface colour. The crumb was dense and had a fine, regular pore structure.

### Example 4

White tin breads were prepared as in Example 1 on the basis of the recipe A, except that the dough was proofed by leaving it at room temperature (22_°C) for 8 or 24 hours (covered with foil) before baking. After 8 hours a fully proofed dough had been obtained. After 24 hours the fully proofed dough had not lost volume and developed a slightly greyish surface. During baking slightly less ovenspring was observed than in breads that had been proofed for 90 minutes (see Example 1, recipe A). Surface, crust and crumb properties of the breads obtained after baking were comparable to those of the breads obtained from recipe A in Example 1. Bread volume of breads obtained after 8 hours proofing was 4200 ml per 1000 g. For the breads obtained after 24 hours proofing the observed bread volume was 4100 ml per 1000 g. These results show that the present invention provides a dough preparation method that yields highly stable fully proofed doughs that after baking yield breads that are very similar to yeast leavened breads. Furthermore, the preparation method according to the present invention produces excellent results even if proofing occurs under ambient conditions. Thus, the present method offers the advantage that it does not require the use of a proofing cabinet.

## Claims

1. A method of preparing a baked or fried product from leavened dough, said method comprising the successive steps of:
a. forming a dough by combining flour, water, a slow reacting leavening system consisting of a leavening acid and a leavening base and optionally one or more other bakery ingredients, said slow reacting system containing (a) a slow reacting leavening acid selected from the group consisting of sodium acid pyrophosphate, calcium acid pyrophosphate, aluminium phosphate, sodium aluminium phosphate, dicalcium phosphate dihydrate, glucono-δ-lactone, encapsulated leavening acids and combinations thereof, and/or (b) an encapsulated leavening base;
b. shaping the dough;
c. proofing the dough at a temperature in the range of 5-45 °C for at least 40 minutes to obtain a proofed dough with a specific volume of at least 1.4 ml/g; and
d. baking or frying the proofed dough;
wherein prior to baking of frying the proofed dough is stored under ambient conditions for more than 1 hour.

2. Method according to claim 1, wherein the proofed dough is not packaged prior to baking or frying.

3. Method according to claim 1 or 2, wherein the proofed dough is not stored or transported under refrigerated or freezing conditions.

4. Method according to claim 1, wherein the proofed product is packaged and subsequently stored and/or transported under refrigerated or freezing conditions, followed by the storage under ambient conditions for more than 1 hour.

5. Method according to any one of the preceding claims, wherein at least 50%, preferably at least 60%, more preferably at least 80% of the carbon dioxide potential of the leavening base is released during proofing.

6. Method according to any one of the preceding claims, wherein the proofing temperature T (in °C) and the proofing time t (in minutes) employed meet the following condition: t > (75-T) x 1,2; and wherein the proofing temperature does not exceed 40 °C.

7. Method according to any one of the preceding claims, wherein step c. comprises proofing the dough at a temperature of 5-25 °C.

8. Method according to any one of the preceding claims, wherein the leavening base is selected from the group consisting of sodium bicarbonate, potassium bicarbonate, ammonium bicarbonate, ammonium carbonate and mixtures thereof.

9. Method according to any one of the preceding claims, wherein the encapsulated leavening base comprises a lipid coating with a melting point of at least 30 °C, preferably with a melting point in the range of 40-80 °C.

10. Method according to any one of the preceding claims, wherein the slow reacting leavening acid is selected from the group consisting of glucono-δ-lactone, sodium acid pyrophosphate, calcium acid pyrophosphate and combinations thereof.

11. Method according to any one of claims 1-9, wherein the slow reacting leavening acid is an encapsulated leavening acid.

12. Method according to any one of the preceding claims, wherein the proofed dough is baked in an oven that was previously preheated to a temperature of at least 190 °C, preferably of at least 200 °C..

13. Method according to any one of the preceding claims, wherein the dough is not proofed within in a sealed package.

## Patentansprüche

1. Verfahren zur Herstellung eines gebackenen oder frittierten Produkts aus gelockertem Teig, wobei das Verfahren die aufeinander folgenden Schritte enthält:
a. Herstellen eines Teigs durch ein Zusammenfügen von Mehl, Wasser, einem langsam reagierenden Gärungselement, welches Gärungssäure und eine Gärungsbase enthält, und optional einer oder mehrerer weiterer Backzutaten, wobei das langsam reagierende Element enthält: (a) eine langsam reagierende Gärungssäure, welche aus der Gruppe ausgewählt ist, welche saures Natriumpyrophosphat, saures Calciumpyrophosphat, Aluminium-Phosphat, Natrium-Aluminium-Phosphat, Dicalcium-Phosphat-Dihydrat, Glukono-ö-Lakton, verkapselte Gärungssäuren und Kombinationen davon enthält, und/oder (b) eine verkapselte Gärungsbase;
b. Formen des Teigs;
c. Gären des Teigs bei einer Temperatur im Bereich von 5 bis 45 Grad Celsius für zumindest 40 Minuten, um einen gebackenen Teig mit einem spezifischen Volumen von zumindest 1,4 ml/g zu erlangen; und
d. Backen oder Braten des verdichteten Teigs;
wobei der gegärte Teig vor dem Backen oder Braten bei mehr als einer Stunde unter Umgebungsbedingungen gelagert wird.

2. Verfahren nach Anspruch 1, bei welchem der gegärgte Teig nicht vor dem Backen oder Braten verpackt wird.

3. Verfahren nach Anspruch 1 oder 2, bei welchem der gegärte Teig nicht unter Kühl- oder Gefrierbedingungen gelagert oder transportiert wird.

4. Verfahren nach Anspruch 1, bei welchem das gegärte Produkt verpackt und nachfolgend unter Kühl- oder Gefrierbedingungen gelagert und/oder transportiert wird, gefolgt durch die Lagerung bei mehr als einer Stunde unter Umgebungsbedingungen.

5. Verfahren nach einem der vorhergehenden Ansprüche, bei welchem zumindest 50 %, vorzugsweise zumindest 60 %, bevorzugt zumindest 80 % des Kohlendioxid-Potentials der Gärungsbase während des Gärens freigegeben wird.

6. Verfahren nach einem der vorhergehenden Ansprüche, bei welchem die Gärungstemperatur T (in Grad Celsius) und die Gärungszeit t (in Minuten), welche angewendet werden, die folgende Bedingung einhalten: t > (75 - T) x 1,2; und wobei die Gärungstemperatur 40 Grad Celsius nicht übersteigt.

7. Verfahren nach einem der vorhergehenden Ansprüche, bei welchem Schritt c. ein Gärung des Teigs bei einer Temperatur von 5 bis 25 Grad Celsius enthält.

8. Verfahren nach einem der vorhergehenden Ansprüche, bei welchem die Gärungsbase aus der Gruppe ausgewählt ist, welche Natrium-Bikarbonat, Kalium-Bikarbonat, Ammonium-Bikarbonat, Ammonium-Karbonat und Mischungen daraus enthält.

9. Verfahren nach einem der vorhergehenden Ansprüche, bei welchem die verkapselte Gärungsbase eine flüssige Beschichtung mit einem Schmelzpunkt von zumindest 30 Grad Celsius enthält, vorzugsweise mit einem Schmelzpunkt im Bereich von 40 bis 80 Grad Celsius.

10. Verfahren nach einem der vorhergehenden Ansprüche, bei welchem die langsam reagierende Gärungssäure aus der Gruppe ausgewählt ist, welche Glukose-δ-Lakton, saures Natriumpyrophosphat, saures Calciumpyrophosphat und Kombinationen daraus enthält.

11. Verfahren nach einem der Ansprüche 1 bis 9, bei welchem die langsam reagierende Gärungssäure eine verkapselte Gärungssäure ist.

12. Verfahren nach einem der vorhergehenden Ansprüche, bei welchem der gegärte Teig in einem Ofen gebacken wird, welcher zuvor auf eine Temperatur von zumindest 190 Grad Celsius, vorzugsweise zumindest 200 Grad Celsius, vorgewärmt wurde.

13. Verfahren nach einem der vorhergehenden Ansprüche, bei welchem der Teig nicht innerhalb von einer versiegelten Verpackung verdichtet wird.

## Revendications

1. Méthode de préparation d'un produit cuit au four ou frit à partir d'une pâte levée, ladite méthode comprenant les étapes successives suivantes :
a. la formation d'une pâte en associant de la farine, de l'eau, un système de levage réactionnel lent comprenant un acide levant et une base levante et éventuellement, un ou plusieurs autres ingrédients de boulangerie, ledit système réactionnel lent contenant (a) un acide de levage réactionnel lent choisi dans le groupe comprenant le pyrophosphate acide de sodium, le pyrophosphate acide de calcium, le phosphate d'aluminium, le phosphate d'aluminium sodium, le dihydrate de phosphate dicalcique, la glucono-δ-lactone, les acides levants encapsulés et leurs combinaisons, et/ou (b) une base levante encapsulée ;
b. la mise en forme de la pâte ;
c. le levage de la pâte à une température de l'ordre de 5 à 45°C pendant au moins 40 minutes pour obtenir une pâte levée présentant un volume spécifique d'au moins 1,4 ml/g ; et
d. la cuisson au four ou la friture de la pâte levée ;
dans laquelle, avant la cuisson au four ou la friture de la pâte levée, la pâte est conservée dans des conditions ambiantes pendant au moins 1 heure.

2. Méthode selon la revendication 1, dans laquelle la pâte levée n'est pas empaquetée avant d'être cuite au four ou frite.

3. Méthode selon la revendication 1 ou 2, dans laquelle la pâte levée n'est pas conservée ou transportée dans des conditions de réfrigération ou de congélation.

4. Méthode selon la revendication 1, dans laquelle le produit levé est empaqueté et ensuite conservé et/ou transporté dans des conditions de réfrigération ou de congélation, et est ensuite stocké dans des conditions ambiantes pendant plus d'une heure.

5. Méthode selon l'une quelconque des revendications précédentes, dans laquelle au moins 50 %, de préférence au moins 60 %, de manière davantage préférée, au moins 80 % du potentiel de dioxyde de carbone de la base levante sont libérés pendant le levage.

6. Méthode selon l'une quelconque des revendications précédentes, dans laquelle la température de levage T (en °C) et le temps de levage t (en minutes) utilisés répondent aux conditions suivantes : t > (75 - T) x 1,2 ; et dans laquelle la température de levage ne dépasse pas 40 °C.

7. Méthode selon l'une quelconque des revendications précédentes, dans laquelle l'étape c. comprend le levage de la pâte à une température de 5 à 25°C.

8. Méthode selon l'une quelconque des revendications précédentes, dans laquelle la base de levage est choisie dans le groupe comprenant le bicarbonate de sodium, le bicarbonate de potassium, le bicarbonate d'ammonium, le carbonate d'ammonium et leurs mélanges.

9. Méthode selon l'une quelconque des revendications précédentes, dans laquelle la base levante encapsulée comprend un revêtement de lipide présentant un point de fusion d'au moins 30°C, de préférence un point de fusion de l'ordre de 40 à 80°C.

10. Méthode selon l'une quelconque des revendications précédentes, dans laquelle l'acide de levage réactionnel lent est choisi dans le groupe comprenant la glucono-δ-lactone, le pyrophosphate acide de sodium, le pyrophosphate acide de calcium et leurs combinaisons.

11. Méthode selon l'une quelconque des revendications 1 à 9, dans laquelle l'acide de levage réactionnel lent est un acide levant encapsulé.

12. Méthode selon l'une quelconque des revendications précédentes, dans laquelle la pâte levée est cuite dans un four qui a été chauffé au préalable à une température d'au moins 190°C, de préférence d'au moins 200°C.

13. Méthode selon l'une quelconque des revendications précédentes, dans laquelle la pâte n'est pas levée dans un emballage scellé.
